# EUROPEAN PATENT APPLICATION

(11) **EP 4 492 674 A1**
(43) Date of publication of application: **15.01.2025**
(21) Application number: 23185056.1
(22) Date of filing: 12.07.2023
(51) Int. Cl.: H02P 29/024, H02P 3/12, H02P 21/36

(54) **A CONTROLLER FOR A PERMANENT MAGNET MACHINE**

(71) Applicant: Hamilton Sundstrand Corporation, Charlotte, NC 28217 (US)
(72) Inventor: SANGHA, Parminder, Solihull (GB); MCLEAN, Andrew, Solihull (GB)
(74) Representative: Dehns

(57) **Abstract**

A controller for a drive system, the drive system comprising a permanent magnet machine, wherein the controller is configured to receive a short circuit signal indicating that a short circuit failure has been detected in the drive system and in response to receiving the short circuit signal, control the permanent magnet machine into a braking mode, wherein in the braking mode, energy is drawn from the permanent magnet machine in order to decelerate the permanent magnet machine.

## Description

### Technical Field

This disclosure relates to a controller for a permanent magnet machine. This disclosure also relates to a drive system, an aircraft and a method.

### Background

Permanent magnet machines (e.g. motors) are used in many automotive, aerospace and industrial applications due their high power density and high efficiency as compared to alternative topologies. Permanent magnet machines may be surface permanent magnet machines, internal permanent magnet machines, or embedded permanent magnet machines.

The performance of the permanent magnet machine is typically controlled with a drive system. The machine has a stator with stator windings that are distributed to wrap around one or more stator teeth. A rotating field is generated by the stator windings.

The drive system may have safety features built in to protect the machine and drive system from faults that may occur during operation. A fault that may occur is a shorted turn in the windings. For example, the fault may occur due to insulation failure, vibrations in the machine, or manufacturing defects. High currents can flow in shorted turns which may lead to high temperatures in the windings and detrimental system effects. It is therefore important that responsive actions are taken quickly and effectively upon detection of such faults.

### Summary

According to a first aspect, there is provided a controller for a drive system, the drive system comprising a permanent magnet machine. The controller is configured to:
receive a short circuit signal indicating that a short circuit failure (e.g. a shorted turn within a winding or a short across a channel) has been detected in the drive system;
in response to receiving the short circuit signal, control the permanent magnet machine into a braking mode, wherein in the braking mode, energy is drawn from the permanent magnet machine in order to decelerate the permanent magnet machine.

By decelerating the permanent magnet machine when a short circuit failure is detected using a braking mode, the damage caused by the short circuit can be minimised, as the time for which there is high current and high temperature in the machine windings may be reduced.

In the braking mode, the controller may set a negative torque demand to draw energy from the permanent magnet machine.

In the braking mode, the controller may be configured to draw energy from the permanent magnet machine using a speed control loop.

In the braking mode, the controller may be configured to draw energy from the permanent magnet machine using a current control loop.

In the braking mode, the controller may be configured to store the energy generated in an auxiliary energy storage, wherein in a primary power source failure mode, the auxiliary energy storage is configured to supply power to the drive system.

In the braking mode, the controller may be configured to transfer the energy generated to a primary power source, wherein in a normal operating mode, the primary power source is configured to supply power to the drive system.

In the braking mode, the controller may be configured to transfer the energy generated to a braking resistor, to dissipate the energy.

The negative torque may be generated using healthy windings in the drive system, wherein the healthy windings are windings in which the short circuit failure is not present.

The braking mode may comprise a current demand reduction stage, wherein the current demand reduction stage involves decreasing a current demand to the permanent magnet machine.

The braking mode may comprise a stationary current demand stage, wherein the stationary current demand stage involves maintaining the current demand in the permanent magnet machine such that current is drawn from the permanent magnet machine. In the stationary current demand stage the controller may be configured to maintain the current demand at an approximately constant value.

In the stationary current demand stage, the current demand may alternatively oscillate about an approximately constant value.

The braking mode may comprise a current demand increase stage, wherein the current demand increase stage involves increasing the current demand to the permanent magnet machine.

The controller is configured to end the braking mode when the permanent magnet machine reaches a threshold speed.

The stationary current demand stage may occur after the current demand reduction stage, and the current demand increase stage may occur after the stationary current demand stage.

In the current demand reduction stage, the rate of change of current demand may not exceed a threshold decrease gradient.

In the current demand increase stage, the rate of change of current demand may not exceed a threshold increase gradient.

By maintaining the rate of change of current demand below threshold gradient values during the current demand reduction and current demand increase stages, current spikes in the permanent magnet machine windings may be reduced.

The permanent magnet machine may be a permanent magnet motor.

According to a second aspect, there is provided a drive system comprising the controller of the first aspect.

According to a third aspect, there is provided an aircraft comprising the drive system of the second aspect.

According to a fourth aspect, there is provided a method for controlling a drive system, the drive system comprising a permanent magnet machine. The method comprises:
receiving a short circuit signal indicating that a short circuit failure has been detected in the drive system;
in response to receiving the short circuit signal, controlling the permanent magnet machine into a braking mode, wherein in the braking mode energy is drawn from the permanent magnet machine in order to decelerate the permanent magnet machine.

The method may comprise any features or functional steps described with respect to the first to third aspects.

### Brief Description of the Drawings

Various examples will now be described, by way of example only, and with reference to the accompanying drawings, in which:
Fig. 1 shows a cross section of a surface permanent magnet machine arrangement with distributed windings;
Fig. 2 shows a cross section of a surface permanent magnet machine arrangement with concentrated windings;
Fig. 3 shows a block diagram of a drive system and a load, wherein the drive system comprises a permanent magnet motor;
Fig. 4 shows a flow diagram of a method implemented by a controller for controlling a drive system comprising a permanent magnet machine; and
Fig. 5 shows a plot of normalised current demand against time.

### Detailed Description

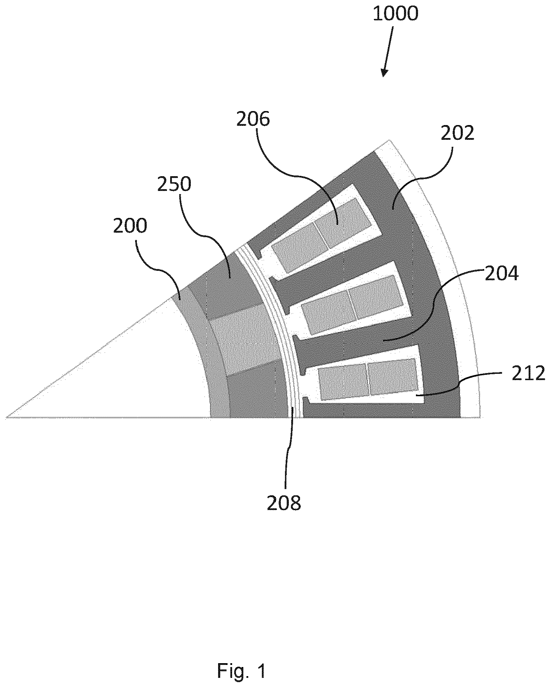

Referring to Fig. 1, a cross section of a surface permanent magnet machine arrangement 1000 with distributed stator windings 206 is shown. In Fig. 1, part of the machine arrangement is shown which illustrates one pole pitch. The surface permanent magnet machine 1000 is a surface permanent magnet motor 1000. In this example, the stator comprises integer slot/pole/phase. In examples, the stator may comprise fractional slot/pole/phase. In other examples, the surface permanent magnet machine 1000 is a surface permanent magnet generator.

The permanent magnet machine arrangement 1000 comprises a rotor shaft 200. The rotor shaft is arranged to rotate relative to a stator 202.

A plurality of surface permanent magnets 250 are attached to the outer circumference of the rotor shaft 200. The magnets 250 are held in position with a retaining sleeve 208. The retaining sleeve 208 may be a composite sleeve. In examples, the retaining sleeve is provided in addition to securing means that directly secure the magnets 250 to the rotor shaft 200. In examples, the retaining sleeve 208 may be omitted and the magnets may be attached to the circumference of the rotor shaft 200 with securing means. The securing means may be adhesive. In most applications, the sleeve is required for safety and reliability reasons depending on the design and operating environment.

The magnets 250 are grouped in groups of three magnets 250 which form a pole. A plurality of magnetic poles are provided around the outer circumference of the rotor shaft 200 such that the magnetic poles form an annulus around the outer circumference of the rotor shaft 200.

The arrangement 1000 comprises a stator 202 which forms a housing and is the stationary part of the rotary system. The stator 202 is formed of iron. The stator 202 may also be formed of a different ferromagnetic metal. The stator 202 comprises a number of stator teeth 204 which extend towards the rotor shaft 200. Between the teeth 204 are stator slots 212.

The stator windings 206 are distributed to wrap around one or more stator teeth 204. A rotating field is generated by the stator windings 206. The stator windings 206 may consist of a few, or many turns in a coil and with sever.

The rotor shaft 200 may be covered with a carbon fibre or metallic sleeve (not shown) to safely retain the magnets in position for mechanical integrity under operating conditions.

The surface permanent magnet machine 1000 may be used in aircraft or automotive applications where efficiency, reliability and size of the machine is particularly important.

In examples, the permanent magnet machine 1000 may be an internal permanent magnet machine or an embedded permanent magnet machine.

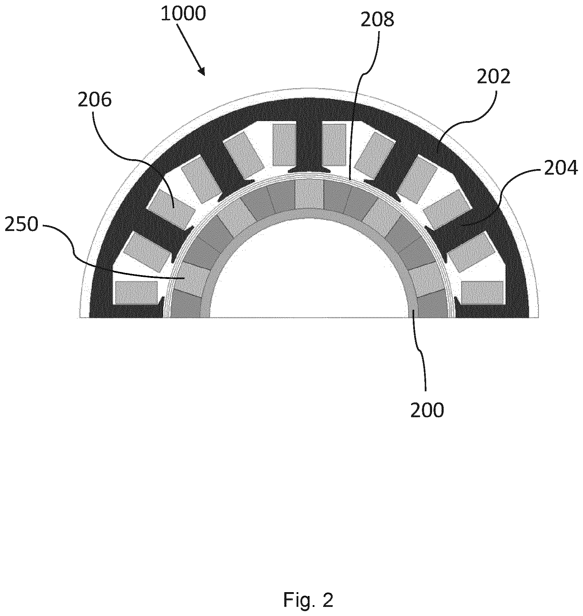

Referring to Fig. 2, a cross section of a surface permanent magnet machine arrangement 1000 with concentrated stator windings 206 is shown. The machine shown in Fig. 2 operates in substantially the same way as the machine shown in Fig. 1, except the windings 206 are concentrated around each stator tooth 204. Concentrated wound machines can also be constructed with different slot and pole combinations.

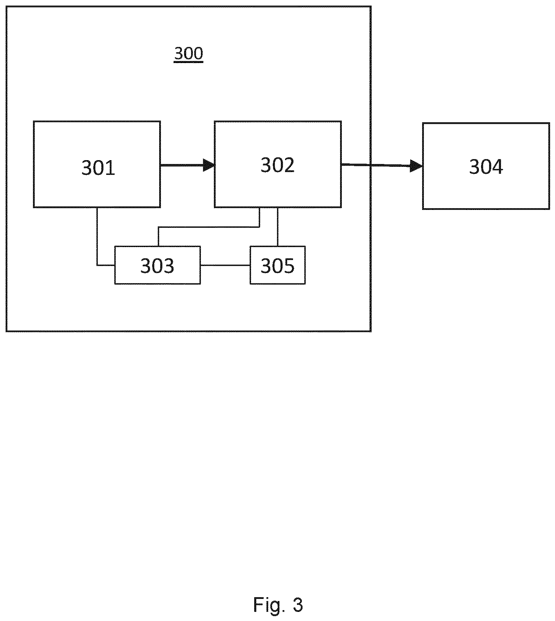

Referring to Fig. 3, a drive system 300 and a load 304 are shown. The drive system 300 comprises a primary power source 301, a permanent magnet machine 302, a controller 303 and an auxiliary energy storage 305.

In the present embodiment, the permanent magnet machine 302 is a permanent magnet motor 302.

The permanent magnet motor 302 is mechanically coupled to the load 304, wherein the permanent magnet motor 302 is configured to drive the load 304 during operation in a normal operating mode.

In some examples, the load 304 may be an aircraft propeller, an aircraft control surface or another aircraft component.

The primary power source 301 is electronically coupled with the permanent magnet motor 302 and the controller 303, such that the primary power source 301 is configured to supply power to the permanent magnet motor 302 and the controller 303 during operation in the normal operating mode.

The controller 303 is communicatively coupled to the permanent magnet motor 302, the primary power source 301 and the auxiliary energy storage 305.

The auxiliary energy storage is configured to supply power to the drive system 300 in the event of a primary power source failure mode e.g. in which there is a failure of the primary power source 301 or a related component, resulting in the primary power source 301 not being able to adequately supply power to the motor 302

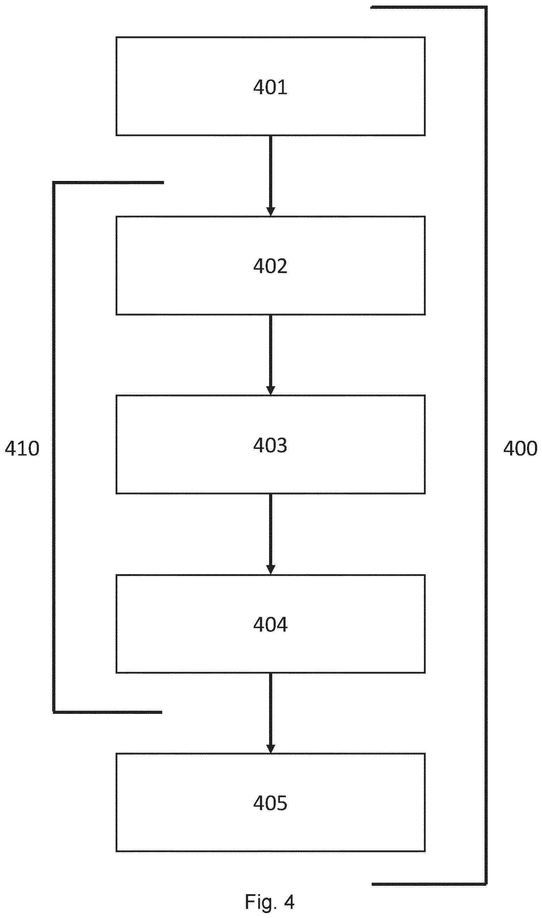

The controller 303 is configured to receive a short circuit signal indicating that a short circuit failure has been detected in the drive system 300. In response to receiving the short circuit signal, the controller is configured to control the permanent magnet motor 302 into a braking mode 410, see Figure 4.

When a short circuit fault occurs (e.g. a shorted turn within a winding or a short across a channel), the shorted coil in the stator winding opposes the magnetic field. High currents can flow in the shorted turns, which may lead to high temperatures in the windings and high severity system defects.

The controller 303 is configured to transfer energy generated in the braking mode 410 to the auxiliary energy storage 305.

In alternative embodiments, the permanent magnet machine 302 may be a permanent magnet generator. In this case, the load 304 is omitted and a drive is included to rotate the permanent magnet generator, such that it supplies power to a power storage in a normal operating mode. If a short circuit failure is detected in the drive system, the drive is disconnected, before the controller controls the permanent magnet generator into the braking mode 410, as in the previous embodiment.

Referring to Fig. 4, a method 400 implemented by the controller 303 for controlling the drive system 300 is shown. The method 400 comprises an initial stage 401, a current demand reduction stage 402, a stationary current demand stage 403, a current demand increase stage 404 and a final stage 405.

In the initial stage 401, a short circuit fault is detected, and a short circuit signal is generated e.g. by a not shown short circuit detector.

The controller 303 receives the short circuit signal and moves from the initial stage 401 to the current demand reduction stage 402.

The current demand reduction stage 402, stationary current demand stage 403 and current demand increase stage 404 together form stages of the braking mode 410. In the braking mode 410, the stationary current demand stage 403 may occur after the current demand reduction stage 402, and the current demand increase stage 404 may occur after the stationary current demand stage 403.

In the braking mode 410, the controller 303 sets a negative torque demand, such that the controller 303 draws energy from the permanent magnet machine 302 i.e. to reduce the kinetic energy of the rotor 200. This results in an opposing torque being applied to the rotor shaft 200, causing the permanent magnet machine 302 to decelerate.

The negative torque demand is generated using the healthy windings in the drive system 300, wherein the healthy windings are windings 206 in which the short circuit failure is not present. If the short circuit failure is a shorted turn, the healthy windings may be located within the same channel in which the fault has occurred and also other channels. If the short circuit failure is a 3-phase short circuit, the healthy windings may be only from other channels in which the fault has not occurred.

In some examples, the controller 303 may draw energy from the permanent magnet machine 302 using a speed control loop e.g. by varying a speed demand.

In some examples, the controller 303 may draw energy from the permanent magnet machine 302 using a current control loop e.g. by varying a current demand.

The use of a current control loop may be preferable in comparison to a speed control loop, as the current loop is usually an inner loop e.g. the inner most loop. This means a correction to the current may produce a faster response than a correction to the speed, as corrections to inner loops often have a faster effect than corrections to outer loops. A faster response is beneficial as it may reduce the time taken to decelerate the permanent magnet machine 302, minimising the damage caused by the short circuit failure.

In the braking mode 410, negative current demand is applied to the q-axis current of the permanent magnet machine 302, generating negative motor torque. The d-axis current of the permanent magnet machine 302 may be substantially unaffected by the demands from the controller 303.

In some examples, the auxiliary energy storage 305 may not be present in the drive system 300.

In some examples, the controller 303 may be configured to transfer the energy generated in the braking mode 410 back to the primary power source 301. In the normal operating mode (e.g. without a short circuit fault), the primary power source 303 may be configured to use this returned energy to drive the permanent magnet machine 302 at a later time, or supply the returned energy to a different machine.

In some examples, the controller 303 may be configured to transfer the energy generated in the braking mode 410 to a braking resistor (not shown) to dissipate the energy generated.

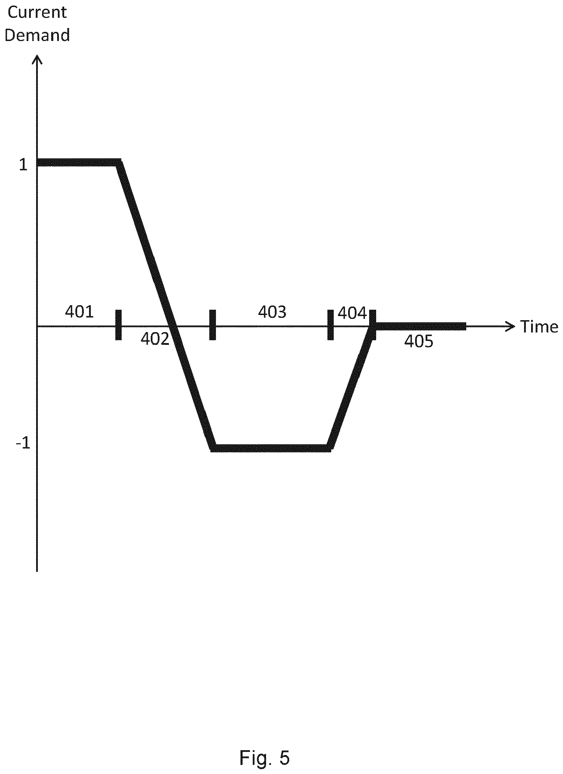

Fig. 5 shows the normalised current demand that the controller sets to the permanent magnet machine during the stages of the method 400. As mentioned above, the current demand may be a q-axis current demand.

In the initial stage 401, the current demand remains approximately constant at a value based on the previous speed demand of the permanent magnet machine 402 during the normal operating mode.

In the current demand reduction stage 402, the current demand to the permanent magnet machine 302 is decreased, e.g. at an approximately constant rate. Whilst decreasing, the current demand transitions from positive values to negative values. This corresponds to a transition from a motoring torque to a braking torque being applied to the permanent magnet machine 302. When the current demand is a negative value, the controller is setting a current demand to draw current from the machine windings i.e. to draw energy from the permanent magnet machine 302. The rate of change of current in the permanent magnet machine 302 during the current demand reduction stage 402 may not exceed a threshold decrease gradient. The threshold decrease gradient may represent a value at which the current flow produced by the permanent magnet machine 302 is controlled such that it does cause damage to any component of the drive system 300.

In the stationary current demand stage 403, the controller sets a current demand to the permanent magnet machine 302 such that current is drawn from the permanent magnet machine 302. The controller sets a current demand which remains approximately constant across the stationary current demand stage 403. In some examples, the current demand may alternatively oscillate about an approximately constant value or may vary about the value in another way.

In the current demand increase stage 404, the controller sets a current to the permanent magnet machine 302 which increases at an approximately constant rate. The rate of change of current demand to the permanent magnet machine 302 during the current demand increase stage 404 may not exceed a threshold increase gradient. The threshold increase gradient represents a value at which the current flow produced by the permanent magnet machine 302 is controlled such that it does cause damage to any component of the drive system 300.

By maintaining the rate of change of current demand during the current demand reduction stage 402 and current demand increase stage 404 below respective threshold gradients, the exposure of the permanent magnet machine 402 to high currents and temperatures may be reduced.

The magnitude of the gradient of the current demand in the current demand reduction stage 402 and the current demand increase stage 404 may be approximately equal.

The controller 303 moves from the current demand increase stage 404 to the final stage 405 when the permanent magnet machine 302 reaches a threshold speed. To determine when machine speed reaches the threshold speed, speed itself or any quantity indicative of speed may be measured and compared to a threshold. The threshold speed represents a value at which the permanent magnet machine 302 may no longer be damaged by the short circuit failure, and may be close to the permanent magnet machine 302 being at rest (e.g. 5 rpm).

While various method steps have been described in relation to the controller, it should be understood that multiple controllers may be used, with each controller performing some of the method steps. At least some of the controller(s) may be located remotely from the permanent magnet machine.

Various aspects disclosed in the various examples may be used alone, in combination, or in a variety of arrangements not specifically discussed in the examples described in the foregoing and this disclosure is therefore not limited in its application to the details and arrangement of components set forth in the foregoing description or illustrated in the drawings. For example, aspects described in one example may be combined in any manner with aspects described in other examples. Although particular examples have been shown and described, it will be obvious to those skilled in the art that changes and modifications may be made without departing from the invention in its broader aspects. The scope of the following claims should not be limited by the examples set forth in the examples, but should be given the broadest reasonable interpretation consistent with the description as a whole.

## Claims

1. A controller for a drive system, the drive system comprising a permanent magnet machine; the controller configured to:
receive a short circuit signal indicating that a short circuit failure has been detected in the drive system;
in response to receiving the short circuit signal, control the permanent magnet machine into a braking mode, wherein in the braking mode, energy is drawn from the permanent magnet machine in order to decelerate the permanent magnet machine.

2. The controller of claim 1, wherein in the braking mode, the controller sets a negative torque demand to draw energy from the permanent magnet machine.

3. The controller of claim 1 or 2, wherein in the braking mode, the controller is configured to draw energy from the permanent magnet machine using a speed control loop.

4. The controller of any preceding claim, wherein in the braking mode, the controller is configured to draw energy from the permanent magnet machine using a current control loop.

5. The controller of any preceding claim, wherein in the braking mode, the controller is configured to transfer the energy generated to an auxiliary energy storage, wherein in a primary power source failure mode, the auxiliary energy storage is configured to supply power to the drive system.

6. The controller of any preceding claim, wherein in the braking mode, the controller is configured to transfer the energy generated to a primary power source, wherein in a normal operating mode, the primary power source is configured to supply power to the drive system.

7. The controller of any preceding claim, wherein in the braking mode, the controller is configured to transfer the energy generated to a braking resistor to dissipate the energy.

8. The controller of claims 2 to 7, wherein the negative torque demand is generated using healthy windings in the drive system, wherein the healthy windings are windings in which the short circuit failure is not present.

9. The controller of any preceding claim, wherein the braking mode comprises a current demand reduction stage, wherein the current demand reduction stage comprises decreasing a current demand to the permanent magnet machine.

10. The controller of any preceding claim, wherein the braking mode comprises a current demand increase stage, wherein in the current demand increase stage comprises increasing the demand current to the permanent magnet machine.

11. The controller of any preceding claim, wherein the controller is configured to end the braking mode when the permanent magnet machine reaches a threshold speed.

12. The controller of any preceding claim, wherein the permanent magnet machine is a permanent magnet motor.

13. A drive system comprising the controller of any preceding claim.

14. An aircraft comprising the drive system of claim 13.

15. A method for controlling a drive system, the drive system comprising a permanent magnet machine, the method comprising:
receiving a short circuit signal indicating that a short circuit failure has been detected in the drive system;
in response to receiving the short circuit signal, controlling the permanent magnet machine into a braking mode, wherein in the braking mode energy is drawn from the permanent magnet machine in order to decelerate the permanent magnet machine.
